# FASCICULE DE BREVET EUROPEEN

(11) **EP 0 907 929 B1**
(45) Date de publication et mention de la délivrance du brevet: **18.09.2002**
(21) Numéro de dépôt: 98917297.8
(22) Date de dépôt: 02.04.1998
(51) Int. Cl.: G06K 19/077

(54) **PROCEDE D'INSERTION D'UN MODULE ELECTRONIQUE DANS UN CORPS DE CARTE A MEMOIRE ELECTRONIQUE**
VERFAHREN ZUM EINBRINGEN EINES ELEKTRONISCHEN MODULS IN EINE CHIPKARTE MIT ELEKTRONISCHEM GEDÄCHTNIS
METHOD FOR INSERTING AN ELECTRONIC MODULE IN A CARD BODY WITH ELECTRONIC MEMORY

(30) Priorité: 10.04.1997 FR 9704430
(43) Date de publication de la demande: 14.04.1999
(73) Titulaire: SCHLUMBERGER INDUSTRIES, 92120 Montrouge (FR)
(72) Inventeur: LEYDIER, Robert, F-91400 Orsay (FR); D'ARBONNEAU, Bertrand, F-75015 Paris (FR)
(74) Mandataire: Lemoyne, Didier
(86) Numéro de dépôt international: FR9800671
(87) Numéro de publication internationale: WO98045805

(56) Documents cités:
- EP-A- 0 322 320
- EP-A- 0 334 733
- US-A- 5 581 445

## Description

La présente invention concerne un procédé d'insertion d'un module électronique dans un corps de carte à mémoire électronique.

L'invention trouve une application particulièrement avantageuse dans le domaine de la fabrication des cartes à mémoire électronique dans lesquelles un module électronique est inséré dans une cavité moulée ou usinée dans un corps de carte.

Une technique connue de fabrication de cartes à mémoire électronique consiste d'abord à réaliser un module électronique constitué d'une pastille semi-conductrice disposée sur une première face d'un substrat isolant, en matériau thermoplastique par exemple, ladite pastille semi-conductrice étant reliée à des contacts électriques déposés sur une deuxième face du substrat par des fils conducteurs traversant des trous pratiqués dans ledit substrat.

Puis, le module électronique ainsi obtenu est inséré dans une cavité aménagée dans le corps de carte. Dans le cas où ledit corps de carte est extrait d'une feuille de matériau thermoplastique laminée, la cavité est réalisée par usinage dans l'épaisseur de ladite feuille. Lorsque le corps de carte est moulé, la cavité est obtenue directement en donnant à l'empreinte du moule une forme appropriée.

Pour fixer le module électronique dans le corps de carte, on peut déposer quelques gouttes d'adhésif, du type cyanoacrylate par exemple, dans la cavité, puis insérer ledit module dans ladite cavité, et enfin exercer une force de pressage sur le module électronique.

La mise en contact forcé du module et du corps de carte permet d'obtenir un film d'adhésif mince et homogène. Cependant, les déformations résiduelles du module électronique, découpé par exemple d'une bande continue par un dispositif poinçon matrice, et de la cavité réalisée par moulage par exemple, s'opposent, une fois la force de pressage relâchée, à l'immobilité de l'assemblage, condition essentielle pour obtenir les pleines performances de l'adhésif.

Le temps de polymérisation au bout duquel les performances mécaniques sont supérieures à 80% de celles obtenues avec un temps de pressage très long est voisin de 60 secondes.

D'une manière générale, la capacité horaire de production du procédé diminue lorsque le temps de pressage augmente.

C'est pourquoi le temps de pressage choisi doit réaliser un compromis entre les performances mécaniques du joint d'adhésif et la capacité horaire de production. Il ne doit pas être trop court pour ne pas hypothéquer la qualité du collage, mais il ne doit pas être trop long pour assurer une cadence de production suffisante.

Toutefois, cette solution de compromis n'est pas satisfaisante car un changement de matériaux, une variation des états de surface et des conditions atmosphériques modifient la réaction de l'adhésif et peut entrainer des amorces de décollement, on sait en particulier que l'humidité favorise le démarrage de la polymérisation. Il en résulte que le suivi statistique du procédé d'insertion connu n'est pas possible et que de grandes quantités de cartes doivent être testées afin de garantir le collage.

EP-A-0334733 divulgue un procédé d' insertion d'un module électronique dans une cavité de corps de carte, utilisant un élément de fixation imprégné d'un matériau adhésif themoactivable, dans lequel ledit élément est écrasé et simultanément chauffé par ultrason pour polymériser le matériau adhésif. Le préambule de la revendication 1 est basé sur ce document.

Au vu de ce qui précède, le problème technique à résoudre par l'objet de la présente invention est de proposer un procédé d'insertion d'un module électronique sur un substrat thermoplastique dans une cavité aménagée dans un corps de carte à mémoire électronique en matériau thermoplastique, procédé qui réaliserait un temps de pressage équivalent infini, tout en diminuant le temps d'insertion à quelques centaines de millisecondes et en optimisant les performances mécaniques de l'adhésif.

La solution au problème technique posé est obtenue, selon la présente invention, par un procédé d'insertion d'un module électronique sur substrat thermoplastique selon la revendication 1.

Ainsi, on comprend que l'énergie ultrasonore soude de façon définitive le substrat thermoplastique du module dans la cavité, ce qui a pour effet de maintenir la force de pressage pendant un temps infini et donc de permettre une polymérisation dans des conditions idéales conduisant à des performances mécaniques optimales du joint d'adhésif. Par contre, l'immobilisation de la carte au poste de pressage/soudure aux ultrasons peut être limitée au seul temps nécessaire pour réaliser la soudure qui, compte tenu des faibles quantités de matière mises en jeu, est très court, de l'ordre de quelques dixièmes de seconde. La polymérisation complète sous pression de l'adhésif, qui peut atteindre des durées voisines de 60 secondes, s'effectue en temps masqué au cours des étapes suivantes de fabrication de la carte.

On voit donc que, tout en réduisant la durée de l'opération d'insertion, le procédé conforme à l'invention permet d'atteindre les pleines performances mécaniques de l'adhésif, ceci sans remettre en cause de manière fondamentale le matériel existant et avec l'avantage de diminuer le taux de prélèvements de test de conformité.

Selon un mode de mise en oeuvre du procédé de l'invention, il est prévu que, préalablement à l'étape a), on aménage dans ladite cavité des concentrateurs d'énergie ultrasonore, destinés à venir en contact avec le substrat thermoplastique du module électronique. Le rôle desdits concentrateurs d'énergie est de réduire le niveau d'énergie ultrasonore nécessaire au soudage du module dans la cavité à une valeur inférieure à 100 millijoule. De ce fait, l'état de surface au dos de la carte n'est pas détérioré.

Ajoutons enfin que, selon le mode de fabrication de la carte, les concentrateurs d'énergie ultrasonore sont réalisés par moulage, avec le corps de carte ou par usinage, avec la cavité. Dans une variante, lesdits concentrateurs seront sur le module électronique

La description qui va suivre, en regard des dessins annexés, donnés à titre d'exemples non limitatifs, fera bien comprendre en quoi consiste l'invention et comment elle peut être réalisée.

La figure 1 est une vue en coupe partielle d'un corps de carte avant insertion du module électronique.

La figure 1a est une vue de dessus du corps de carte de la figure 1.

La figure 2 est une vue en coupe partielle du corps de carte de la figure 1 pendant l'insertion du module électronique.

La figure 3 est une vue de dessus d'une variante de la figure 1a.

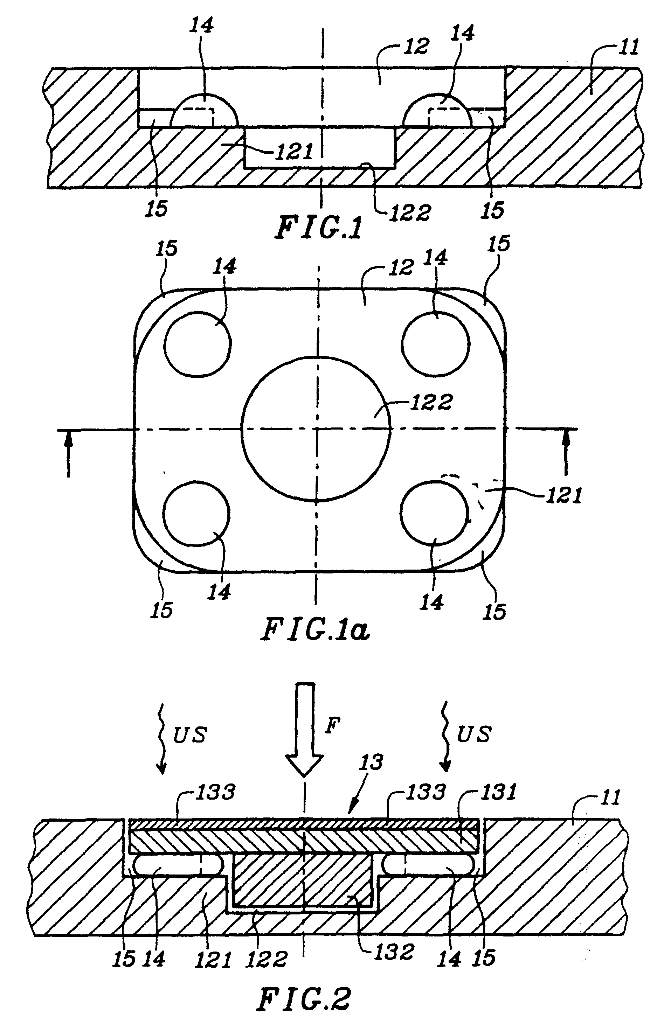

Sur la figure 1 est représenté en coupe partielle un corps 11 d'une carte à mémoire électronique réalisé dans un matériau thermoplastique, comme le polychlorure de vinyle, l'ABS ( acrylonitryl-butadiène-styrène), le polyester ou le polycarbonate. Ledit corps 11 de carte peut être obtenu par laminage ou par moulage.

On peut observer sur la figure 1 que le corps 11 de carte comporte une cavité 12 destinée à recevoir un module électronique 13 qui, comme le montre schématiquement la figure 1, est constitué d'un substrat isolant 131 en matériau thermoplastique, tel que le polycarbonate, portant sur une face une pastille semi-conductrice 132 reliée, par des fils conducteurs non représentés, à des contacts électriques 133 déposés sur une autre face du substrat thermoplastique 131. Compte tenu de la forme particulière du module 13, la cavité 12 présente un épaulement 121 pour recevoir le substrat isolant 131 et un logement 122 pour la pastille semi-conductrice 132.

Le mode de réalisation de la cavité 12 dépend du mode de fabrication du corps de carte, à savoir usinage ou moulage.

Le procédé pour insérer le module électronique 13 dans la cavité 12 consiste, dans une première étape, à disposer dans la cavité 12 un adhésif afin de coller le substrat thermoplastique 131 du module 13 sur le matériau thermoplastique du corps 11 de carte. Selon l'exemple montré sur les figures 1 et 1a, on peut déposer quatre gouttes 14 d'une colle cyanoacrylate sur l'épaulement 121 aux quatre coins de la cavité 12.

Puis, le module électronique 13 est disposé dans la cavité 12 de manière à ce que le substrat 131 vienne en contact avec les gouttes 14 de colle de l'épaulement 121.

Enfin, une force F de pressage est appliquée sur le module, d'une part, pour amener les gouttes 14 à former un joint de colle entre l'épaulement 121 de la cavité 12 et le substrat thermoplastique 131, et d'autre part, pour mettre ledit substrat 13 en appui sur des concentrateurs 15 d'énergie ultrasonore dont une disposition possible est donnée sur la figure 1a. Simultanément, une énergie ultrasonore US est appliquée sur le module électronique 13 de façon à souder les concentrateurs 15 sur le substrat thermoplastique 131.

Le module électronique 13 étant ainsi maintenu, la force F de pressage peut être relâchée En d'autres termes, le temps de pressage est réduit au temps qu'il est nécessaire d'appliquer l'énergie ultrasonore pour réaliser la soudure concentrateurs 15/substrat 131, à savoir quelques dixièmes de seconde. Il en résulte une capacité de production plus grande et une qualité optimale du collage puisque la polymérisation de la colle peut se faire pendant une durée infinie sous une force équivalente à la force F de pressage.

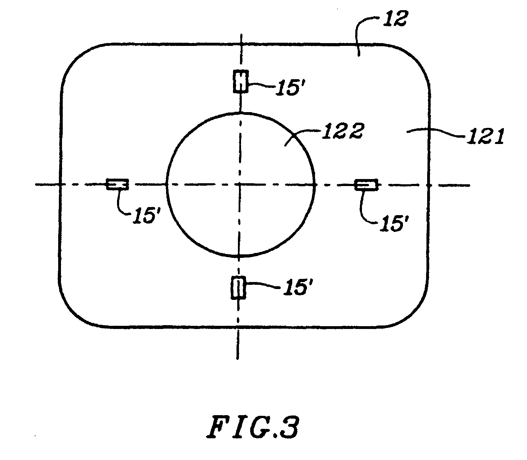

Bien entendu, les concentrateurs d'énergie ultrasonore peuvent prendre diverses formes, comme les protubérances 15' de la figure 3, réalisées par usinage ou par moulage selon le mode de fabrication du corps 11 de carte.

## Revendications

1. Procédé d'insertion d'un module électronique (13) sur substrat thermoplastique (131) dans une cavité (12) aménagée dans un corps (11) de carte à mémoire électronique en matériau thermoplastique, **caractérisé en ce que** ledit procédé comporte les étapes consistant à :
a)déposer dans ladite cavité (12) un adhésif (14) destiné à coller le substrat thermoplastique (131) du module électronique (13) sur le matériau thermoplastique du corps (11) de carte,
b)disposer le module électronique (13) dans la cavité (12),
c)appliquer, simultanément, une force (F) de pressage sur le module électronique (13) pour compresser la colle entre le substrat thermoplastique (131) du module électronique (13) et le corps (11) de carte, et une énergie ultrasonore (US) de façon à souder ledit substrat (131) au corps (11) de la carte.

2. Procédé selon la revendication 1, **caractérisé en ce qu'**il consiste à relâcher la force (F) de pressage une fois la soudure réalisée.

3. Procédé d'insertion selon 1a revendication 1 **caractérisé en ce que**, préalablement à l'étape a), on aménage dans ladite cavité (12) des concentrateurs (15;15') d'énergie ultrasonore, destinés à venir en contact avec le substrat thermoplastique (131) du module électronique (13).

4. Procédé d'insertion selon la revendication 3, **caractérisé en ce que** lesdits concentrateurs (15;15') d'énergie ultrasonore sont réalisés par moulage.

5. Procédé d'insertion selon la revendication 3, **caractérisé en ce que** lesdits concentrateurs (15; 15') d'énergie ultrasonore sont réalisés par usinage.

6. Procédé d'insertion selon la revendication 1, **caractérisé en ce que**, préalablement à l'étape a), on aménage sur le substrat thermoplastique (131) du module électronique (13) des concentrateurs d'énergie ultrasonore, destinés à venir en contact avec la cavité (12).

7. Procédé d'insertion selon l'une quelconque des revendications 1 à 6, **caractérisé en ce que** ledit substrat thermoplastique (131) est en polycarbonate.

8. Procédé d'insertion selon l'une quelconque des revendications 1 à 7, **caractérisé en ce que** le matériau thermopiastique du corps (12) de carte est choisi parmi le polychlorure de vinyle, l'ABS, le polyester et le polycarbonate.

## Patentansprüche

1. Verfahren zum Einsetzen eines Elektronikmoduls (13) auf thermoplastischem Substrat (131) in einen Hohlraum (12), der in einem Kartenkörper (11) einer elektronischen Speicherkarte aus thermoplastischem Material angeordnet ist, **dadurch gekennzeichnet, dass** das besagte Verfahren folgende Arbeitsschritte umfasst:
a) Auftragen in dem besagten Hohlraum (12) eines Haftmittels (14) zum Kleben des thermoplastischen Substrats (131) des Elektronikmoduls (13) auf das thermoplastische Material des Kartenkörpers (11),
b) Einsetzen des Elektronikmoduls (13) in den Hohlraum (12)
c) Gleichzeitiges Anwenden einer Anpresskraft (F) auf das Elektronikmodul (13) zum Zusammendrücken des Klebers zwischen dem thermoplastischen Substrat (131) des Elektronikmoduls (13) und dem Kartenkörper (11) sowie einer Ultraschallenergie (US), so dass das besagte Substrat (131) mit dem Kartenkörper (11) verschweißt wird.

2. Verfahren nach Anspruch 1, **dadurch gekennzeichnet, dass** es darin besteht, die Anpresskraft (F) nach durchgeführter Verschweißung zu lösen.

3. Einsetzverfahren nach Anspruch 1, **dadurch gekennzeichnet, dass** dem Arbeitsschritt a) vorausgehend im besagten Hohlraum (12) Ultraschallenergiekonzentratoren (15;15') angebracht werden, die dazu bestimmt sind, mit dem thermoplastischen Substrat (131) des Elektronikmoduls (13) in Berührung zu kommen.

4. Einsetzverfahren nach Anspruch 3, **dadurch gekennzeichnet, dass** die besagten Ultraschallenergiekonzentratoren (15;15') durch Formen hergestellt werden.

5. Einsetzverfahren nach Anspruch 3, **dadurch gekennzeichnet, dass** die besagten Ultraschallenergiekonzentratoren (15;15') durch Bearbeiten hergestellt werden.

6. Einsetzverfahren nach Anspruch 1, **dadurch gekennzeichnet, dass** dem Arbeitsschritt a) vorausgehend auf dem thermoplastischen Substrat (131) des Elektronikmoduls (13) Ultraschallenergiekonzentratoren angeordnet werden, die dazu bestimmt sind, mit dem Hohlraum (12) in Berührung zu kommen.

7. Einsetzverfahren nach irgendeinem der Ansprüche 1 bis 6, **dadurch gekennzeichnet, dass** das besagte thermoplastische Substrat (131) aus Polycarbonat ist.

8. Einsetzverfahren nach irgendeinem der Ansprüche 1 bis 7, **dadurch gekennzeichnet, dass** das thermoplastische Material des Kartenkörpers (12) entweder aus Polyvinylchlorid, ABS, Polyester oder Polycarbonat ist.

## Claims

1. Method for inserting an electronic module (13) on a thermoplastic substrate (131) in a cavity (12) fitted in an electronic smart card body (11) made of a thermoplastic material, **characterised in that** said method comprises the steps consisting of:
a) depositing in said cavity (12) an adhesive (14) for gluing the thermoplastic substrate (131) of the electronic module (13) to the thermoplastic material of the card body (11).
b) placing the electronic module (13) in the cavity (12),
c) simultaneously applying a pressing force (F) to the electronic module (13) and an ultrasonic energy (US) for compressing the glue between the thermoplastic substrate (131) of the electronic module (13) and the card body (11) so as to solder the said substrat (131) to the card body (11).

2. The method according to claim 1, **characterized in that** the method consist of releasing the pressing force (F) once the solder is done.

3. The inserting method according to claim 1, **characterised in that** prior to stage a), ultrasonic energy concentrators (15; 15') are fitted inside said cavity (12) for coming into contact with the thermoplastic substrate (131) of the electronic module (13).

4. The inserting method according to claim 3, **characterised in that** said ultrasonic energy concentrators (15; 15') are embodied by means of moulding.

5. The inserting method according to claim 3, **characterised in that** said ultrasonic energy concentrators (15; 15') are embodied by means of machining.

6. The inserting method according to claim 1, **characterised in that** prior to step a), ultrasonic energy concentrators are disposed on the thermoplastic substrate (131) of the electronic module (13) and intended to come into contact with the cavity (12).

7. The inserting method according to any one of claims 1 to 6, **characterised in that** said thermoplastic substrate (131) is a polycarbonate substrate.

8. The inserting method according to any one of claims 1 to 7, **characterised in that** the thermoplastic material of the card body (12) is selected from PVC, ABS (acrylonitrile-butadiene-styrene), polyester and polycarbonate.
